# EUROPÄISCHE PATENTSCHRIFT

(11) **EP 3 053 495 B1**
(45) Veröffentlichungstag und Bekanntmachung des Hinweises auf die Patenterteilung: **11.07.2018**
(21) Anmeldenummer: 16152503.5
(22) Anmeldetag: 25.01.2016
(51) Int. Cl.: A47J 31/44

(54) **GETRÄNKEAUTOMAT**
BEVERAGE MACHINE
MACHINE À BOISSONS

(30) Priorität: 05.02.2015 DE 102015101666
(43) Veröffentlichungstag der Anmeldung: 10.08.2016
(73) Patentinhaber: Miele & Cie. KG, 33332 Gütersloh (DE); Eugster/Frismag AG, 8580 Amriswil (CH)
(72) Erfinder: Wolbeck, Michael, 33330 Gütersloh (DE); Wüstefeld, Michael, 59555 Lippstadt (DE); van Pels, Ulrich, 33378 Rheda-Wiedenbrück (DE); Jungclaus, Dirk, 59302 Oelde (DE); Giezendanner, Stefan, 9054 Haslen (DE)

(56) Entgegenhaltungen:
- WO-A2-02/26614
- WO-A2-2010/044116
- US-B1- 6 182 555

## Beschreibung

Getränkeautomaten zur Herstellung von Aufgussgetränken, die mindestens eine Abstellfläche für wenigstens ein mit einem Getränk und/oder Heißwasser zu befüllendes Gefäß und mindestens einen oberhalb dieser Abstellfläche angeordneten Auslauf für ein in dem Getränkeautomaten zubereitetes Getränk sowie eine Ausgabeeinrichtung zur Abgabe von Heißwasser umfassen, sind hinlänglich bekannt.

Als Beispiel für einen derartigen Getränkeautomaten wird auf die DE 202 20 056 U1 verwiesen. Die in dieser Druckschrift offenbarte Lösung umfasst oberhalb der Abstellfläche sogar zwei Ausläufe, so dass gleichzeitig zwei nebeneinander aufgestellte Gefäße mit einem in dem Getränkeautomaten zubereiteten Getränk, also beispielsweise mit Kaffee, befüllt werden können. Die Ausläufe sind dabei Bestandteil eines Zentralauslaufs, der vertikal verstellbar ausgeführt ist, so dass er in diesem Fall manuell unterschiedlichen Höhen der darunter angeordneten Gefäße angepasst werden kann. Neben den Ausläufen ist bei der in der genannten Druckschrift dargestellten Lösung einseitig eine zusätzliche Ausgabeeinrichtung zur Abgabe von Heißwasser vorhanden. Diese befindet sich jedoch in unmittelbarer Nähe zu den Ausläufen für die Getränke, so dass ein gleichzeitiger Bezug eines Getränkes aus dem Getränkeautomaten und die Zubereitung oder Aufbereitung eines mit Heißwasser aufzubrühenden Getränkes nicht möglich ist. Wird aus den Ausläufen kein Getränk entnommen, besteht hingegen die Möglichkeit, das Heißwasser aus der Ausgabeeinrichtung zu entnehmen und damit beispielsweise ein Getränk aufzubrühen oder aufzumischen. Häufig ist jedoch der Bedarf vorhanden, gleichzeitig mehrere Getränke aus Heißwasser aufzubereiten oder sogar gleichzeitig ein oder mehrere in dem Getränkeautomaten zubereitete Getränke und darüber hinaus wenigstens ein oder mehrere mit Heißwasser zubereitete Getränke herzustellen. Hierfür ist der bekannte Getränkeautomat nicht geeignet.

Ein Getränkebereiter mit einer ähnlichen Anordnung der Auslaufeinrichtungen ist aus der WO 2010 / 044 116 A2 bekannt. Die US 6 182 555 B1 offenbart einen Verkaufsautomaten für Heißgetränke, der einen zentralen, feststehenden Halter für eine Mehrzahl von Auslaufdüsen für das ausgewählte zubereitete Getränk umfasst. Die Auslaufdüsen sind dabei nah aneinander angeordnet und für die Befüllung eines einzigen Gefäßes vorgesehen.

Der Erfindung stellt sich somit das Problem, einen Getränkeautomaten bereitzustellen, der zumindest geeignet ist, gleichzeitig mehrere Getränke aus Heißwasser zuzubereiten beziehungsweise das Heißwasser für die Aufbereitung von mehreren Getränken gleichzeitig zu nutzen.

Erfindungsgemäß wird dieses Problem durch einen Getränkeautomaten mit den Merkmalen des Patentanspruchs 1 gelöst.

Vorteilhafte Ausgestaltungen und Weiterbildungen der Erfindung ergeben sich aus den nachfolgenden Unteransprüchen.

Ein Getränkeautomat zur Herstellung von Aufgussgetränken, umfassend:
- mindestens eine Abstellfläche für wenigstens ein mit einem Getränk und/oder Heißwasser zu befüllendes Gefäß,
- mindestens einen oberhalb dieser Abstellfläche angeordneten Auslauf für ein in dem Getränkeautomaten zubereitetes Getränk und
- eine Ausgabeeinrichtung zur Abgabe von Heißwasser,
wurde erfindungsgemäß dahingehend weitergebildet, dass der Getränkeautomat oberhalb der Abstellfläche mindestens eine zweite Ausgabeeinrichtung zur Abgabe von Heißwasser aufweist, die beabstandet zu der ersten Ausgabeeinrichtung zur Abgabe von Heißwasser angeordnet ist.

Die mit der Erfindung erreichbaren Vorteile bestehen insbesondere darin, dass die Anordnung der Ausgabeeinrichtungen zur Abgabe von Heißwasser derart erfolgen, dass zeitgleich mehrere Getränke aus Heißwasser zu- oder aufbereitet werden können, was eine erhebliche Zeitersparnis mit sich bringt und damit eine wesentliche Verbesserung gegenüber bekannten Getränkeautomaten darstellt.

Gemäß einer ersten Ausgestaltung der Erfindung ist zwischen den Ausgabeeinrichtungen zur Abgabe von Heißwasser ein Abstand vorgesehen, der zeitgleich die Aufstellung von zwei mit dem Heißwasser zu befüllenden Gefäßen nebeneinander ermöglicht. Das Maß für den Abstand sollte demnach vorzugsweise größer als der Durchmesser zweier, nebeneinander aufgestellter Gefäße sein. Berücksichtigt man beispielsweise einen durchschnittlichen Durchmesser einer Kaffeetasse von circa 8 cm, so sollte der Abstand etwa zwischen 5 cm und 10 cm betragen, so dass die Aufstellung der Gefäße nebeneinander problemlos möglich ist. Ein Berührungskontakt zwischen den Gefäßen ist dabei unschädlich.

Da es nicht in jedem Fall notwendig oder erwünscht ist, beide Ausgabeeinrichtungen zur Abgabe von Heißwasser gleichzeitig zu betreiben, sondern auch Fälle eintreten können, in denen nur eine Ausgabeeinrichtung zur Abgabe von Heißwasser benutzt wird, geht eine Weiterbildung der Erfindung dahin, dass der Getränkeautomat eine Steuerungseinheit aufweist, die zur separaten Ansteuerung der vorhandenen Ausgabeeinrichtungen für Heißwasser geeignet ist. Über die genannte Steuerungseinheit werden die Ausgabeeinrichtungen folglich einzeln oder gemeinsam angesteuert. Die entsprechenden Steuerungsbefehle können vom Nutzer des Getränkeautomaten beispielsweise über eine Tastatur eingegeben werden.

Eine weitere, sehr sinnvolle Lösung besteht darin, Sensoren vorzusehen, die die Aufstellung eines Gefäßes unterhalb der Ausgabeeinrichtung für Heißwasser erfassen und in diesem Fall ein Signal erzeugen, das an die Steuerungseinheit weitergegeben und in dieser verarbeitet wird. Durch ein derartiges Positionssignal kann auch sichergestellt werden, dass stets nur Heißwasser abgegeben wird, wenn tatsächlich ein Gefäß unterhalb der Ausgabeeinrichtung aufgestellt ist. Diese Maßnahme trägt somit wesentlich zur Sicherheit des Getränkeautomaten bei. Fehlbedienungen sind damit ausgeschlossen.

Eine konkrete Möglichkeit, die Ausgabeeinrichtungen für Heißwasser über die Steuerungseinheit anzusteuern besteht ferner darin, in das Strömungsleitungssystem des Getränkeautomaten Ventile einzubringen, die, in Strömungsrichtung betrachtet, den Ausgabeeinrichtungen für Heißwasser vorgeschaltet sind und durch die Steuerungseinheit angesteuert werden. Bei den Ventilen kann es sich um Einwegventile oder Mehrwegventile handeln.

Um einen erfindungsgemäßen Getränkeautomaten möglichst kompakt ausführen zu können, wird darüber hinaus vorgeschlagen, dass die Ausgabeeinrichtungen für Heißwasser und der mindestens eine Auslauf für ein in dem Getränkeautomaten zubereitetes Getränk in einem in seiner Höhe verstellbaren Zentralauslauf angeordnet sind. Die gemeinsame Unterbringung der Ausgabeeinrichtungen für Heißwasser und der Ausläufe für die zubereiteten Getränke in dem Zentralauslauf hat den wesentlichen Vorteil, dass der in seiner Höhe verstellbare Zentralauslauf optimal an die Höhe der Gefäße angepasst werden kann, so dass Spritzer des Getränkes oder Heißwassers vermeidbar sind. Durch diese Maßnahme reduzieren sich Getränkeverluste und der Reinigungsaufwand für den Getränkeautomaten.

Eine spezielle Ausführungsvariante eines erfindungsgemäßen Getränkeautomaten besteht ferner darin, dass der Getränkeautomat zwei Ausläufe für ein in dem Getränkeautomaten zubereitetes Getränk und zwei Ausgabeeinrichtungen für Heißwasser aufweist, wobei, auf eine gemeinsame Ebene projiziert, die Ausläufe für ein in dem Getränkeautomaten zubereitetes Getränk zwischen den Ausgabeeinrichtungen für Heißwasser und beabstandet zu diesen angeordnet sind. Mit dieser Lösung wird es in Abhängigkeit der vorgesehenen Abstände sogar möglich, zeitgleich zwei Getränke zu beziehen und darüber hinaus zwei Getränke aus Heißwasser zu- oder aufzubereiten. Insgesamt lassen sich damit in einem Arbeitsgang bis zu vier Getränke bereitstellen. Dies stellt einen wesentlichen Vorteil gegenüber bislang bekannten Getränkeautomaten dar.

Im Zuge des Bestrebens, Energie einzusparen geht eine weiterführende Ausgestaltung der Erfindung dahin, dass der Getränkeautomat eine Heizeinrichtung für die Bereitstellung des Heißwassers und eine separate, für die Zubereitung der in dem Getränkeautomaten herzustellenden Getränke einsetzbare Heizeinrichtung aufweist. Diese Lösung hat den Vorteil, dass stets nur die Heizeinrichtung betrieben werden muss, die für die Zubereitung des jeweiligen Getränkes erforderlich ist.

Dabei ist es von Bedeutung, zu erkennen, dass die Heizeinrichtung für die Zubereitung der in dem Getränkeautomaten herzustellenden Getränke zur Erzeugung einer Wassertemperatur zwischen 80°C und 95°C und die Heizeinrichtung für die Bereitstellung des Heißwassers zur Erzeugung einer Wassertemperatur von 100°C geeignet sein muss.

In besonderer Weise lässt sich dadurch eine serielle Schaltung der Heizeinrichtungen umsetzen. Mit anderen Worten wird für den Bezug eines in dem Getränkeautomaten hergestellten Getränkes die Heizeinrichtung zur Erzeugung der geringeren Temperatur verwendet, da hier Temperaturen im Bereich zwischen 80 °C und 95 °C ausreichen. Dieser Einsatzbereich ist der häufigere in einem erfindungsgemäßen Getränkeautomaten. Wird allerdings Heißwasser benötigt, um ein Getränk zuzubereiten, wird das in der ersten Heizeinrichtung für die Zubereitung der in dem Getränkeautomaten herzustellenden Getränke auf eine Temperatur zwischen 80°C und 95 °C erhitzte Wasser durch die zweite Heizeinrichtung für die Zubereitung des Heißwassers geleitet, wo lediglich eine Temperaturerhöhung auf 100 °C erfolgen muss. Auf diese Weise kann die zweite Heizeinrichtung für die Zubereitung des Heißwassers in ihrer Leistung wesentlich geringer ausgelegt werden, was wiederum einer kompakten und Kosten sparenden Bauweise des Getränkeautomaten entgegenkommt. Zusammenfassend ausgedrückt umfasst der Getränkeautomat Mittel und Vorrichtungen, die dazu eingerichtet sind, die Heizeinrichtung, Ventile und Pupne derart zu steuern, dass Heißwasser oder Dampf mit unterschiedlichen Temperaturen, je nach Bedarf oder Benutzerauswahl, ausgegeben werden. Alternativ oder ergänzend ist die Heißwasserzubereitungsvorrichtung dazu eingerichtet, das Wasser bedarfsweise auf 60 °C zu erhitzen, wie es für manche Teesorten bevorzugt ist. Insgesamt stellt die Heißwasserzubereitungsvorrichtung einen Temperaturbereich von 60°C bis 100°C bereit.

Die Erfindung wird nachfolgend anhand der beigefügten Zeichnungen näher erläutert. Das gezeigte Ausführungsbeispiel stellt dabei keine Einschränkung auf die dargestellte Variante dar, sondern dient lediglich der Erläuterung eines Prinzips der Erfindung.
Gleiche oder gleichartige Bauteile werden stets mit denselben Bezugsziffern bezeichnet. Um die erfindungsgemäße Funktionsweise veranschaulichen zu können, sind in den Figuren nur stark vereinfachte Prinzipdarstellungen gezeigt, bei denen auf die für die Erfindung nicht wesentlichen Bauteile verzichtet wurde. Dies bedeutet jedoch nicht, dass derartige Bauteile bei einer erfindungsgemäßen Lösung nicht vorhanden sind.
Es zeigt:
- Figur 1:: ein Beispiel für einen Getränkeautomaten,
- Figur 2:: einen Zentralauslauf als isolierte Baueinheit in einer perspektivischen Ansicht
und
- Figur 3:: ein Prinzipschaltbild der Funktionsweise eines Getränkeautomaten.

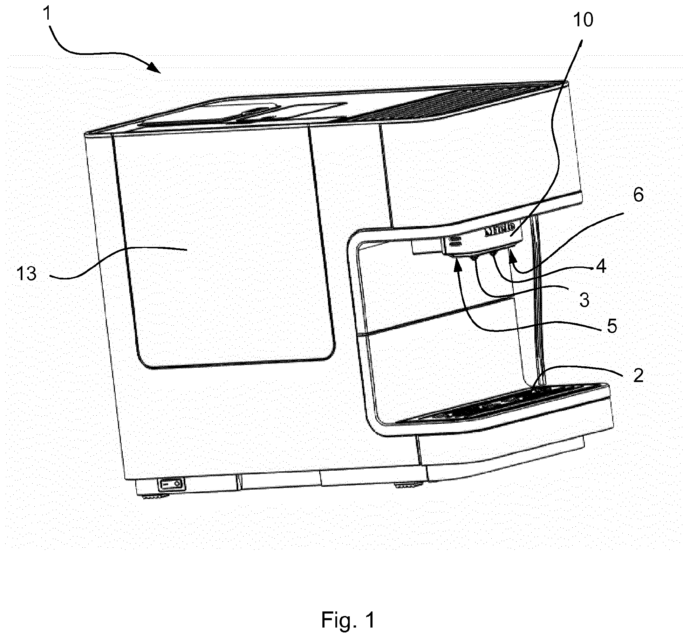

In der Figur 1 ist am Beispiel eines mobilen Standgerätes ein Getränkeautomat 1 dargestellt, bei dem es sich vorliegend um einen Kaffeeautomaten handelt. Dieser weist eine Abstellfläche 2 auf, deren Größe es ermöglicht, mehrere Gefäße zur Aufnahme von Getränken nebeneinander abzustellen. Oberhalb der Abstellfläche 2 befindet sich ein Zentralauslauf 10, der im dargestellten Beispiel an seiner der Abstellfläche 2 zugewandten Unterseite insgesamt zwei Ausläufe 3, 4 für die Abgabe eines in dem Getränkeautomaten 1 zubereiteten Getränkes und zwei zueinander beabstandete Ausgabeeinrichtungen 5, 6 zur Abgabe von Heißwasser aufweist. Im Bereich einer der Seitenflächen des Getränkeautomaten 1 ist darüber hinaus ein Wassertank 13 vorhanden, der lösbar und bündig in dem Getränkeautomaten aufgenommen ist, so dass er zur Befüllung mit frischem Wasser 14 entnommen und anschließend wieder in den Getränkeautomaten 1 eingesetzt werden kann. Das frische Wasser 14 wird für die Zubereitung der Getränke benötigt, bei denen es sich vorliegend um Kaffeegetränke handelt.

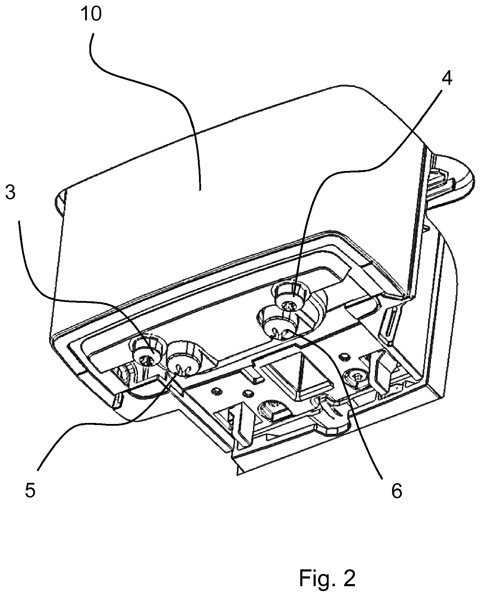

Die Figur 2 zeigt einen Zentralauslauf 10 als isolierte Baugruppe und in einer perspektivischen Ansicht von der Seite der Abstellfläche 2 her betrachtet. Daraus wird die spezielle Anordnung der Ausläufe 3 und 4 zur Abgabe des in dem Getränkeautomaten 1 hergestellten Getränkes sowie der, auf eine gemeinsame Ebene projiziert, zwischen den Ausläufen 3, 4 vorhandenen, Ausgabeeinrichtungen 5, 6 zur Abgabe von Heißwasser, ersichtlich. Diese Anordnung erfolgt dergestalt, dass die Ausgabeeinrichtungen 5 und 6 einen seitlichen Abstand zueinander aufweisen, der das Abstellen je eines Gefäßes unter jeder der Ausgabeeinrichtungen 5, 6 zur Abgabe von Heißwasser ermöglicht. Darüber hinaus weisen die Ausgabeeinrichtungen 5, 6 auch zu den benachbart angeordneten Ausläufen 3, 4 zur Entnahme der in dem Getränkeautomaten 1 hergestellten Getränke einen hinreichenden Abstand auf. Auch dieser Abstand ist ausreichend, um unter jeden der vorhandenen Ausläufe 3, 4 je ein Gefäß abzustellen, das mit dem Getränk befüllt werden soll.

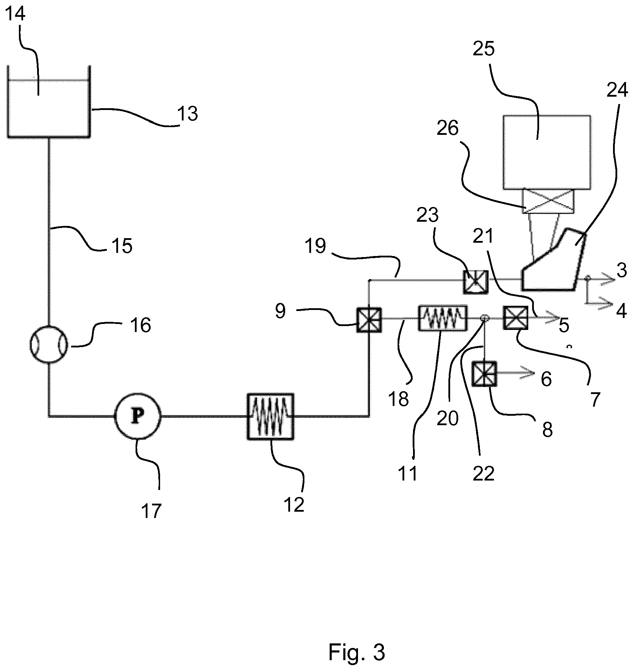

Aus der Figur 3 geht ein Prinzipschaltbild der Funktionsweise eines Getränkeautomaten 1 nach der Erfindung hervor. Der Getränkeautomat 1 weist ein Strömungsleitungssystem auf.

Der Wassertank 13 dient hierbei als Wasserquelle und enthält frisches Wasser 14 zur Zubereitung eines Getränkes oder von Heißwasser. Das aus dem Wassertank 13 entnommene frische Wasser 14 wird über eine Wasserleitung 15, in die ein Durchflussmessgerät 16 in Form eines "Flowmeters", eine Pumpe 17 und eine erste Heizeinrichtung 12 integriert sind, einer Brüheinheit 24 zugeführt, die im vorliegenden Fall zur Zubereitung des Kaffees Verwendung findet. Die Flüssigkeit gelangt dann mittels Leitungen und von der Brüheinheit zum Zentralauslauf 10 mit den Ausgabeeinrichtungen 3, 4. Die Heizeinrichtung 12 ist dabei geeignet, eine Wassertemperatur im Bereich von 85 °C bis 95 °C, bevorzugt 89 °C, zu erzeugen, die ausreichend ist um einen Kaffee zuzubereiten. Hierzu muss das Wasser nicht kochen, das heißt, es muss nicht auf eine höhere Temperatur, beispielsweise 100 °C, erhitzt werden, was eine erhebliche Energieeinsparung bedeutet. Die Brüheinheit 24 verfügt ihrerseits über die bereits erwähnten Ausläufe 3, 4, über die das aufgebrühte Getränk entnommen werden kann. Um den Kaffee mit dem erhitztem Wasser zusammenzuführen und in der Brüheinheit 24 aufzubrühen weist der Getränkeautomat 1 gemäß Figur 3 ferner einen Vorratsbehälter 25 auf, in den die Kaffeebohnen eingefüllt werden können. Unterhalb des Vorratsbehälters 25 befindet sich ein Mahlwerk 26, das dem Mahlen der Kaffeebohnen zu einem Kaffeepulver dient. Über eine in der Figur 3 nur andeutungsweise gezeigte Verbindung wird das Kaffeepulver aus dem Mahlwerk 26 in die Brüheinheit 24 überführt und dort mit erhitztem Wasser aufgebrüht. Es bedarf an dieser Stelle keiner besonderen Erwähnung, dass das Mahlwerk 26 entbehrlich ist, wenn beispielsweise unmittelbar Kaffeepulver verwendet und in den Vorratsbehälter 25 eingefüllt wird.
Die Besonderheit des Prinzipschemas in Figur 3 besteht darin, dass ein Teil der Wasserleitung 15 abgezweigt wird. Zur Abzweigung dient ein Ventil 9, bei dem es sich vorliegend um ein Mehrwegventil handelt. Dieses Ventil 9 erlaubt es, das Wasser in die Brühwasserleitung 19 und/oder in die Heißwasserleitung 18 abzuführen, wodurch in der zuvor bereits beschriebenen Weise ein Getränk zubereitet werden kann und/oder Heißwasser erzeugbar ist. In die Brühwasserleitung 19 ist zudem ein weiteres Ventil 23 integriert, dass ein Einwegventil sein kann und der Absperrung dieser Brühwasserleitung 19 dient. Sofern das Mehrwegventil 9 die Absperrung der Brühwasserleitung 19 übernimmt, ist das Ventil 23 entbehrlich. Darüber hinaus dient das Mehrwegventil 9 der Zuführung, in der Heizeinrichtung 12 bereits erhitzten Wassers zu den Ausgabeeinrichtungen 5, 6 zur Abgabe von Heißwasser. Hierzu ist in die Heißwasserleitung 18 eine weitere Heizeinrichtung 11 integriert, die der Erhitzung des in der Heizeinrichtung 12 bereits auf eine Temperatur von vorzugsweise 89 °C gebrachten Wassers eine höhere Temperatur, vorzugsweise auf 100 °C, dient. Anders ausgedrückt erzeugt in der bevorzugten Ausführung die innerhalb der Heißwasserleitung 18 vorhandene Heizeinrichtung 11 kochendes Wasser. Darüber hinaus weist die Heißwasserleitung 18 einen Abzweig 20 auf, der diese in zwei Zweige unterteilt. Es ist dies einerseits die Zuführungsleitung 21 zu einer ersten Ausgabeeinrichtung 5 und andererseits die Zuführungsleitung 22 zu einer zweiten Ausgabeeinrichtung 6. Um beide Ausgabeeinrichtungen 5, 6 wahlweise oder gemeinsam freizugeben oder zu sperren sind Ventile 7, 8 vorhanden, die hierbei als einfache Einwegventile ausgeführt sein können. Das Ventil 7 dient der Absperrung oder Freigabe der Ausgabeeinrichtung 5 und das Ventil 8 der Absperrung oder Freigabe der Ausgabeeinrichtung 6. Mittels einer in der Figur 3 nicht gezeigten Steuerungseinrichtung des Getränkeautomaten 1 können sämtliche der beschriebenen Ventile angesteuert werden, so dass sowohl die Ausläufe 3, 4 als auch die Ausgabeeinrichtungen 5, 6 einzeln oder in beliebigen Kombinationen miteinander zum Einsatz kommen können.

### BEZUGSZEICHENLISTE:

- 1: Getränkeautomat
- 2: Abstellfläche
- 3: Auslauf
- 4: Auslauf
- 5: Ausgabeeinrichtung
- 6: Ausgabeeinrichtung
- 7: Ventil
- 8: Ventil
- 9: Ventil
- 10: Zentralauslauf
- 11: Heizeinrichtung
- 12: Heizeinrichtung
- 13: Wassertank
- 14: Wasser
- 15: Wasserleitung
- 16: Durchflussmessgerät
- 17: Pumpe
- 18: Heißwasserleitung
- 19: Brühwasserleitung
- 20: Abzweig
- 21: Zuführungsleitung
- 22: Zuführungsleitung
- 23: Ventil
- 24: Brüheinheit
- 25: Vorratsbehälter
- 26: Mahlwerk

## Patentansprüche

1. Getränkeautomat (1) zur Herstellung von Aufgussgetränken, umfassend:
- mindestens eine Abstellfläche (2) für wenigstens ein mit einem Getränk und/oder Heißwasser zu befüllendes Gefäß,
- mindestens einen oberhalb dieser Abstellfläche (2) angeordneten Auslauf (3, 4) für ein in dem Getränkeautomaten (1) zubereitetes Getränk und
- eine Ausgabeeinrichtung (5) zur Abgabe von Heißwasser,
wobei der Getränkeautomat (1) oberhalb der Abstellfläche (2) mindestens eine zweite Ausgabeeinrichtung (6) zur Abgabe von Heißwasser aufweist, die beabstandet zu der ersten Ausgabeeinrichtung (5) zur Abgabe von Heißwasser angeordnet ist,
**dadurch gekennzeichnet, dass**
die Ausgabeeinrichtungen (5, 6) für Heißwasser und der mindestens eine Auslauf (3, 4) für ein in dem Getränkeautomaten zubereitetes Getränk in einem in seiner Höhe verstellbaren Zentralauslauf (10) angeordnet sind.

2. Getränkeautomat nach Anspruch 1,
**dadurch gekennzeichnet, dass**
der Abstand zwischen den Ausgabeeinrichtungen (5 und 6) zur Abgabe von Heißwasser zeitgleich die Aufstellung von zwei, mit dem Heißwasser zu befüllenden Gefäßen nebeneinander ermöglicht.

3. Getränkeautomat nach einem der vorstehend genannten Ansprüche,
**dadurch gekennzeichnet, dass**
der Getränkeautomat (1) eine Steuerungseinheit aufweist, die zur separaten Ansteuerung der vorhandenen Ausgabeeinrichtungen (5, 6) für Heißwasser geeignet ist.

4. Getränkeautomat nach Anspruch 3,
**dadurch gekennzeichnet, dass**
die Steuerungseinheit von einem die Aufstellung eines Gefäßes auf der Abstellfläche (2) erfassenden Sensorsignal ansteuerbar ist.

5. Getränkeautomat nach Anspruch 3 oder 4,
**dadurch gekennzeichnet, dass**
die Steuerungseinheit zur Ansteuerung wenigstens eines die Ausgabeeinrichtungen (5, 6) für Heißwasser aktivierenden oder deaktivierenden Ventils (7, 8, 9) geeignet ist.

6. Getränkeautomat nach einem der vorstehend genannten Ansprüche,
**dadurch gekennzeichnet, dass**
der Getränkeautomat (1) zwei Ausläufe (3, 4) für ein in dem Getränkeautomaten (1) zubereitetes Getränk und zwei Ausgabeeinrichtungen (5, 6) für Heißwasser aufweist, wobei, auf eine gemeinsame Ebene projiziert, die Ausläufe (3, 4) für ein in dem Getränkeautomaten (1) zubereitetes Getränk zwischen den Ausgabeeinrichtungen (5, 6) für Heißwasser und beabstandet zu diesen angeordnet sind.

7. Getränkeautomat nach einem der vorstehend genannten Ansprüche,
**dadurch gekennzeichnet, dass**
der Getränkeautomat (1) eine Heizeinrichtung (11) für die Bereitstellung des Heißwassers und eine separate, für die Zubereitung der in dem Getränkeautomaten herzustellenden Getränke einsetzbare Heizeinrichtung (12) aufweist.

8. Getränkeautomat nach Anspruch 7,
**dadurch gekennzeichnet, dass**
die Heizeinrichtung (12) für die Zubereitung der in dem Getränkeautomaten herzustellenden Getränke zur Erzeugung einer Wassertemperatur zwischen 80°C und 95°C und die Heizeinrichtung (11) für die Bereitstellung des Heißwassers zur Erzeugung einer Wassertemperatur von 100°C geeignet ist.

9. Getränkeautomat nach Anspruch 7 oder 8,
**dadurch gekennzeichnet, dass**
die Heizeinrichtungen (11 und 12) seriell nacheinander in das Strömungsleitungssystem des Getränkeautomaten eingebunden sind, wobei, in Strömungsrichtung betrachtet, die Heizeinrichtung (11) für die Bereitstellung des Heißwassers der Heizeinrichtung (12) für die Zubereitung der in dem Getränkeautomaten herzustellenden Getränke nachgeordnet ist.

## Claims

1. Beverage machine (1) for producing infusion beverages, comprising:
- at least one placement surface (2) for at least one vessel to be filled with a beverage and/or with hot water,
- at least one outlet (3, 4), arranged above said placement surface (2), for a beverage to be prepared in the beverage machine (1), and
- a dispensing device (5) for dispensing hot water,
the beverage machine (1) comprising, above the placement surface (2), at least one second dispensing device (6) for dispensing hot water, which dispensing device is arranged at a distance from the first dispensing device (5) for dispensing hot water, **characterised in that** the dispensing devices (5, 6) for hot water and the at least one outlet (3, 4) for a beverage to be prepared in the beverage machine are arranged in a height-adjustable central outlet (10).

2. Beverage machine according to claim 1, **characterised in that**
the distance between the dispensing devices (5 and 6) for dispensing hot water allows two vessels to be filled with the hot water to be placed next to one another at the same time.

3. Beverage machine according to either of the preceding claims, **characterised in that**
the beverage machine (1) comprises a control unit that is suitable for separately controlling the dispensing devices (5, 6) for hot water.

4. Beverage machine according to claim 3, **characterised in that**
the control unit can be controlled by a sensor signal that detects the placement of a vessel on the placement surface (2).

5. Beverage machine according to either claim 3 or claim 4, **characterised in that**
the control unit is suitable for controlling at least one valve (7, 8, 9) which activates or deactivates the dispensing devices (5, 6) for hot water.

6. Beverage machine according to any of the preceding claims, **characterised in that**
the beverage machine (1) comprises two outlets (3, 4) for a beverage to be prepared in the beverage machine (1) and two dispensing devices (5, 6) for hot water, the outlets (3, 4) for a beverage to be prepared in the beverage machine (1) being arranged, projected on a common plane, between and at a distance from the dispensing devices (5, 6) for hot water.

7. Beverage machine according to any of the preceding claims, **characterised in that**
the beverage machine (1) comprises a heating device (11) for preparing hot water and a separate heating device (12) which can be used for preparing beverages to be produced in the beverage machine.

8. Beverage machine according to claim 7, **characterised in that**
the heating device (12) for preparing the beverages to be produced in the beverage machine is suitable for generating a water temperature of between 80°C and 95°C, and the heating device (11) is suitable for providing the hot water for generating a water temperature of 100°C.

9. Beverage machine according to either claim 7 or claim 8, **characterised in that**
the heating devices (11 and 12) are integrated in succession in series into the flow-line system of the beverage machine, the heating device (11) for providing the hot water being arranged, when viewed in the flow direction, downstream of the heating device (12) for preparing the beverages to be produced in the beverage machine.

## Revendications

1. Distributeur de boissons (1) servant à produire des boissons obtenues par infusion, comportant :
- au moins une surface de pose (2) pour au moins un récipient à remplir avec une boisson et/ou de l'eau chaude,
- au moins une sortie (3, 4), disposée au-dessus de cette surface de pose (2), pour une boisson préparée dans ce distributeur automatique de boissons (1) et
- un dispositif de distribution (5) servant à distribuer de l'eau chaude,
le distributeur de boissons (1) comprenant, au-dessus de la surface de pose (2), au moins un deuxième dispositif de distribution (6) servant à distribuer de l'eau chaude, lequel est disposé de manière espacée du premier dispositif de distribution (5) servant à distribuer de l'eau chaude, **caractérisé en ce que**
les dispositifs de distribution (5, 6) d'eau chaude et ladite au moins une sortie (3, 4) pour une boisson préparée dans le distributeur de boissons sont disposés dans une sortie centrale (10) réglable en hauteur.

2. Distributeur de boissons selon la revendication 1, **caractérisé en ce que**
la distance entre les dispositifs de distribution (5 et 6) servant à distribuer de l'eau chaude permet simultanément le placement l'un à côté de l'autre de deux récipients à remplir d'eau chaude.

3. Distributeur de boissons selon l'une des revendications précédentes, **caractérisé en ce que**
le distributeur de boissons (1) comprend une unité de commande qui est appropriée pour la commande séparée des dispositifs de distribution (5, 6) d'eau chaude présents.

4. Distributeur de boissons selon la revendication 3, **caractérisé en ce que**
l'unité de commande peut être commandée par un signal de capteur détectant le placement d'un récipient sur la surface de pose (2).

5. Distributeur de boissons selon la revendication 3 ou 4, **caractérisé en ce que**
l'unité de commande est appropriée pour la commande d'au moins une soupape (7, 8, 9) activant ou désactivant les dispositifs de distribution (5, 6) d'eau chaude.

6. Distributeur de boissons selon l'une des revendications précédentes, **caractérisé en ce que**
le distributeur de boissons (1) comprend deux sorties (3, 4) pour une boisson préparée dans le distributeur de boissons (1) et deux dispositifs de distribution (5, 6) d'eau chaude, les sorties (3, 4) pour une boisson préparée dans le distributeur de boissons (1) étant situées, en projection sur un plan commun, entre les dispositifs de distribution (5, 6) d'eau chaude et à distance de ceux-ci.

7. Distributeur de boissons selon l'une des revendications précédentes, **caractérisé en ce que**
le distributeur de boissons (1) comprend un dispositif de chauffage (11) pour la fourniture de l'eau chaude et un dispositif de chauffage (12) séparé pouvant être utilisé pour la préparation des boissons à produire dans le distributeur de boissons.

8. Distributeur de boissons selon la revendication 7, **caractérisé en ce que**
le dispositif de chauffage (12) pour la préparation des boissons à produire dans le distributeur de boissons est approprié pour produire une température d'eau entre 80 °C et 95 °C et le dispositif de chauffage (11) pour la fourniture de l'eau chaude est approprié pour produire une température d'eau de 100 °C.

9. Distributeur de boissons selon la revendication 7 ou 8, **caractérisé en ce que**
les dispositifs de chauffage (11 et 12) sont intégrés en série l'un après l'autre dans le système de conduites d'écoulement du distributeur de boissons, le dispositif de chauffage (11) pour la fourniture de l'eau chaude étant placé, considéré dans le sens d'écoulement, en aval du dispositif de chauffage (12) pour la préparation des boissons à produire dans le distributeur de boissons.
